(19) 

**Europäisches Patentamt**
**European Patent Office**
**Office européen des brevets**

(11) **EP 4 715 441 A1**

(12) **EUROPEAN PATENT APPLICATION**
published in accordance with Art. 153(4) EPC

(43) Date of publication:
**25.03.2026 Bulletin 2026/13**

(21) Application number: **24791651.3**

(22) Date of filing: **18.04.2024**

(51) International Patent Classification (IPC):
*G02B 21/00* (2006.01)     *G02B 5/00* (2006.01)
*G02B 5/08* (2006.01)

(52) Cooperative Patent Classification (CPC):
**G02B 5/00; G02B 5/08; G02B 21/00**

(86) International application number:
**PCT/CL2024/050037**

(87) International publication number:
**WO 2024/216409 (24.10.2024 Gazette 2024/43)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **21.04.2023 CL 202301160**

(71) Applicant: **Pontificia Universidad Católica de
Chile
Santiago (CL)**

(72) Inventors:
• **PAROT FERNÁNDEZ, Vicente José
Santiago (CL)**
• **VALDÉS AHUMADA, Maximiliano Vicente
Antofagasta (CL)**
• **MARINÉ DURANDEAU, Maximiliano Leopoldo
Santiago (CL)**

(74) Representative: **Herrero & Asociados, S.L.
Edificio Aqua - Calle Agustín de Foxá, 4-10, 2ºA
28036 Madrid (ES)**

(54) **METHOD FOR TAKING VOLUMETRIC MEASUREMENTS**

(57) Rapid capture of volumetric images is necessary for performing neurophysiological recordings, such as the release of neurotransmitters in the brain and other applications that require high-speed volumetric measurements. Some methods and systems for simultaneous multifocal image capture require multiplexed focal planes using diffraction optical elements or beam splitter prisms, which can induce optical aberrations. The volumetric image capture solution described in the present invention improves resolution and simplifies the complexity of the components compared to other volumetric image capture methods. The solution of the present invention may have applications in other domains, such as illumination with specific volumetric patterns, characterization of the volumetric light field, and time-controlled interferometric measurements.

Fig. 2

EP 4 715 441 A1

## Description

FIELD OF APPLICATION

The invention consists of a system and methodology for performing volumetric measurements from volumetric images obtained by a volumetric image capture device: The invention aims to solve inconveniences of currently used volumetric image capture devices for measurements in multiple planes, especially in the field of neuroscience.

In its general aspects, the volumetric image capture device of the invention improves resolution and simplifies hardware complexity compared to other solutions for volumetric image capture. The invention may have applications in various domains, such as neuroscience, astronomy, automotive industry, characterization of the volumetric light field, and time-controlled interferometric measurements.

BACKGROUND

In the field of neuroscience, understanding the mechanisms of how the brain works -or ceases to work- allows for more accurate diagnosis and treatment of human neurological and psychiatric diseases. To study decision-making mechanisms regarding evidence accumulation, transparent zebrafish larvae (Danio rerio) are used, which allow for the recording of the complete neuronal activity of the vertebrate brain using fluorescence microscopy. Zebrafish larvae swim against the flowing water to maintain their location in a familiar territory, thus remembering their visual environment for many seconds. Their memory and localization in the brain have been studied through imaging of slow and persistent calcium neuronal transients following modeled visual stimulation. The temporal resolution of current recordings of volumetric neuronal activity resolved by cells does not allow for determining whether persistent activation is sustained by intrinsically slow activation or by a fast recurrent network, although faster fluorescent indicators of synaptic release and membrane voltage are available. This limitation extends to many other questions in neuroscience that require rapid transient dynamics throughout the brain, such as neurotransmitter release and optical membrane electrophysiology.

Next-generation volumetric brain imaging

The motivation to capture the dynamics of intracellular $Ca^{2+}$ from neuronal volumes has stimulated a series of innovations in fluorescence microscopy, recently reviewed by Weisenburger and Vaziri (Annual Review of Neuroscience 41, 431-452; 2018). The main differences between these approaches are based on the nature and distribution of fluorescence excitation and image capture. Linear single-photon (1P) fluorescence excitation can be applied to a plane or complete volume at the same time with low illumination power, facilitating high frame rates when a camera captures the images. Non-linear 2P excitation using ultrafast pulsed lasers must cover the volume sequentially or with some degree of parallelism, which can be distinguished through multiplexed or computationally demixed recording. To record the dynamics of $Ca^{2+}$ resolved in cells, a significant milestone was achieved with whole-brain recording in zebrafish, initially up to 5 Hz using light sheet microscopy and then increased to 12 Hz using extended depth-of-field light sheet microscopy (SPherical-aberration-assisted Extended Depth-of-field, SPED). With similar time resolution, the combination of structured illumination and rapid axial piezoelectric scanning allowed for volumetric brain imaging during active tracking of freely swimming zebrafish (Kim, Dal Hyung, et al. "Panneuronal calcium imaging with cellular resolution in freely swimming zebrafish." Nature methods 14.11 (2017): 1107-1114. https://doi.org/10.1038/nmeth.4429).

While light sheet microscopes with two or more objectives have excellent background light rejection, their volumetric image capture rate is often limited by the mechanical scanning of the objective's focal plane. Another practical strategy to accelerate volumetric measurement is SPED microscopy, which extends the depth of focus by leveraging the elongated point spread function (PSF) generated with a slab that introduces spherical aberration. This approach shifts the fundamental limitation from mechanical scanning of the focus to mechanical scanning of the light sheet, theoretically increasing the volumetric image capture speed to kHz frequencies, which has been demonstrated up to 12 Hz in single-cell resolution images of the whole zebrafish brain.

Recent advances in molecular indicators demand faster temporal resolution to record neurotransmitter release dynamics and membrane voltage. Methods that capture the entire volume of interest with each frame from a camera result in the fastest time resolution and are scalable to large volumes. An approach that uses multifocal diffraction optics enables volumetric microscopy with high magnification but requires complex custom components that hinder adoption and scalability to large areas; this method is being expanded to allow volumetric imaging of complete worms (Caenorhabditis elegans) when combined with a 25-camera array. Another recent approach for volumetric imaging is swept confocally aligned planar excitation (SCAPE) microscopy, in which detection and oblique illumination of the light sheet are performed through the same objective. This method can access large volumes at high resolution and high volumetric frame rates by sequentially acquiring focused frames at different oblique depths with the rotation of a galvanometric mirror, as the only mechanical scanning. The mechanical scanning limitation of SCAPE microscopy is like that of SPED microscopy. The limitations of SCAPE microscopy for application to neuronal activity recordings are the decreased sensitivity due to the shared numerical aperture (NA) between illumination and detection, and increased hardware complexity that includes at least 3 high NA objectives in the imaging path. This approach has not been applied to neuronal activity recording throughout the zebrafish brain.

Among the limited reading methods that capture full volumes with single-camera frames, computational image capture-based microscopy has gained notoriety for its hardware simplicity: light field microscopy using lens arrays captures many small views of the sample in each frame, from which sample tomography can be calculated.

Limitations of existing light field microscopy (LFM)

The implementation of LFM using lens arrays was demonstrated across the zebrafish brain with a bandwidth of 30 Hz, at the expense of cellular resolution. An alternative method for capturing light fields in a single camera frame is based on placing attenuation masks in an intermediate plane, allowing for miniature implementations without lenses. Random diffuser elements have also been proposed to generalize lens arrays and attenuation masks for single-shot light field imaging. Volumetric methods based on computational tomography result in significantly lower resolution, limited by the individual NA of lenslets in an array, or limited to sparse sample fluorescence distributions, especially when using a diffuser or mask. This makes the point spread function of LFM typically ~100 times larger in volume than that allowed by the diffraction limit of the objective. The placement of multifocal lenses, specialized sample mounting, and correlated imaging have also been applied to LFM, improving image artifacts (errors) and increasing hardware complexity. Attenuation masks also result in decreased light performance and sensitivity. On the other hand, diffuser-based methods additionally require scarce samples to survive the inevitable noise associated with background fluorescence detection. A substantial improvement in light field resolution closer to the diffraction limit was achieved by incorporating wave optical effects into the image reconstruction model, but only when the sample is restricted to a single plane. Similarly, accounting for tissue scattering improved volumetric resolution, but was restricted to sparse samples.

But regarding methods that do not require advanced computation, the simple approach is to acquire multiple flat images focused on different depths simultaneously. The brute-force approach requires semitransparent mirrors or beam splitters and several synchronized cameras to capture images at the same time. This approach has a high cost and equipment complexity. Some existing methods allow simultaneous multifocal imaging in a single camera. One of these approaches requires the multiplexing of focal planes using diffraction optical elements that are expensive to design, require additional custom equipment, and have only been applied to high-magnification imaging. A more recent approach uses beam-splitter prisms, which can induce optical aberration due to the long optical path through the high refractive index material.

The present invention achieves a multiplane approach to a microscopic sample in individual camera images of a virtual image matrix generated by a free-space optical cavity. This method has the potential to enable volumetric imaging with high resolution and low complexity, which could be useful in many optical applications beyond neuroscience research.

DESCRIPTION

To address current limitations in spatiotemporal resolution, the present invention proposes a new class of microscope capable of capturing volumetric images with high resolution and low complexity, which could be useful in many optical applications beyond neuroscience research.

Unlike existing light sheet microscopes with cellular resolution, which only resolve up to 12 Hz, or existing fast volumetric microscopes that compromise cellular resolution, the approach of the present invention for volumetric recording is the capture of multifocal virtual images with a single camera. In simple terms, through the invention, it is possible to achieve that each frame captures a virtual image matrix of the sample focused on different depths, said virtual images being generated by reflections within an optical cavity. The virtual image matrix, also referred to as a virtual matrix, imposes different path lengths on sections of the image capture aperture, allowing simultaneous focusing on multiple depths in a volumetric sample while maintaining a diffraction-limited resolution.

To achieve this objective, the method, system, and device developed in the present invention essentially comprise:

- guiding radiation emitted from an extended object through an optical cavity composed of reflective surfaces; and

- configuring the optical cavity to impart different optical path lengths to the radiation guided by the optical cavity depending on the origin position of the radiation from the object and the direction of propagation of the radiation from the object.

Alternatively, the method, system, and device developed in the present invention comprise:

- guiding light emitted by an extended object to be analyzed through a reflective optical cavity;

- focusing the light guided by the cavity using an imaging capture device such that different path lengths imparted to the light guided through the cavity create a series of virtual images; and

- configuring the cavity and the imaging capture device to relate the axial position of the sample to the lateral translation of the virtual images, or to relate the lateral translation of the sample to the axial position of the virtual images.

In this context, a typical implementation of this method, system, and device could include the following features or a subset thereof:

- illuminating an object of interest using coherent or partially coherent radiation;

- illuminating an object of interest using incoherent radiation;

- illuminating an object of interest using radiation with a visible or near-visible wavelength;

- guiding radiation reflected or scattered by the object;

- guiding spontaneously emitted radiation from the object;

- guiding fluorescence emitted from the object;

- using spectral filters to exclusively guide light in a spectrum of interest from the object;

- guiding light emitted from the object through lenses to direct the light and form intermediate images of the object;

- modulating the light emitted from the object with active or passive devices to direct or form images with the emitted light;

- configuring multiple reflective surfaces to guide the light:

  • using semitransparent mirrors;

  • using mirrors with flat surfaces;

  • using mirrors with curved surfaces;

  • using two mirrors;

  • using two flat mirrors with reflective surfaces oriented inward;

  • using two flat mirrors with parallel reflective surfaces; or

  • using two flat mirrors with reflective surfaces forming an acute angle between them;

- guiding light to reflect on the reflective surfaces:

  • reflecting part of the light once on some reflective surface;

  • reflecting light multiple times on the reflective surfaces;

  • directing light through multiple reflections entering from one end of the cavity to exit from the opposite end of the cavity; or

  • directing light through multiple reflections entering from a region of the cavity to exit from the same region of the cavity;

- focusing the guided light to form images:

  • using a lens; or

  • using multiple lenses;

- modulating the guided light by the optical cavity:

     * directing light using active devices by means of:

        * phase modulators;

        * micro-mirror arrays;

        * galvanometric mirrors; and/or

- shutters;

  • using passive devices, for example:

        * spectral filters

- detecting the guided light:

  • using a camera; and/or

  • using photodetectors

- placing detection devices to register the radiation emitted by the object and guided by the optical cavity:

  • locating a camera in a plane where a virtual image of the object is formed, where the plane is:

        * anterior image plane;

        * intermediate image plane; or

        * posterior image plane;

  • locating a camera in intermediate planes where no virtual images of the object are formed;

- sequentially directing the emitted and guided light towards a point photodetector, located in an image plane of the object; and/or

- locating a camera to receive light from the object and light from a coherent reference, detecting its interference.; and/or

- computationally processing the recorded data to infer the three-dimensional origin of the emitted radiation, based on the knowledge of the physical configuration of the device.

The developed invention addresses the mentioned problems without prism elements, implying that it automatically resolves disadvantages associated with the use of such elements, such as cost and introduction of optical aberrations.

As previously stated, current approaches for capturing multi-plane images rely on beam splitters or diffraction optical elements. In this context, the optical cavity used to form and capture the virtual image matrix proposed in the present invention is a simple device, formed by two mirrors that generate a reflection matrix. However, to use these reflections in obtaining multifocal images of a semi-transparent three-dimensional sample, design parameters such as the aperture, length, and angle of the cavity must be chosen, aiming to achieve a desired lateral and axial separation of the virtual images, parameters that will depend on the application in which the optical cavity of the invention will be used.

BRIEF DESCRIPTION OF THE FIGURES

As part of the present invention, the following figures are presented, which represent it, showing preferred embodiments and, therefore, should not be considered as limiting to the definition of the disclosed technical matter.

Fig. 1 shows diagrams of the principle of capturing multifocal images of a virtual matrix for two embodiments of the invention system.

Fig. 2 shows a general scheme of an embodiment of the device of the invention, incorporating a volumetric image capture device.

Fig. 3 shows experimental results of the methodology and system according to an embodiment of the invention.

Fig. 4 shows a scheme of the image capture device simulated in Example No. 2 of the invention.

Fig. 5 shows results of the design of optimal parameters for capturing virtual image matrices through beam propagation.

DESCRIPTION OF PREFERRED EMBODIMENTS

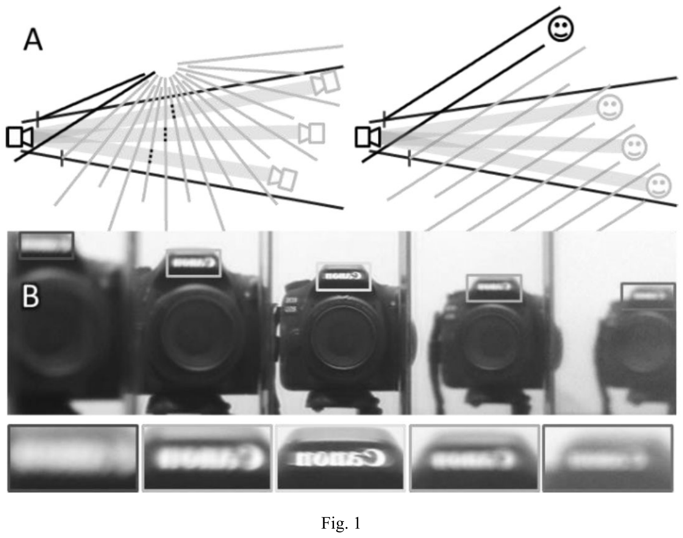

Fig. 1 shows diagrams associated with the principle of capturing multifocal images of a virtual matrix. In section A of Fig. 1, a diagram of converging virtual matrices (left) and parallel virtual matrices (right) is shown. The black lines in these diagrams represent physical mirrors that form the optical cavity, while the gray lines and objects represent virtual images of mirrors and physical objects. On the other hand, the blue lines in the diagrams indicate the light acceptance angle of the virtual matrix, while the red marks indicate the focal distance period of the virtual matrix and the dotted lines indicate perpendicular reflection.

On the other hand, in section B of Fig. 1, an experimental demonstration of the converging virtual matrix is presented, for example, obtained through the converging mirrors that generate the converging virtual matrix diagram in section A (left). In the upper portion of section B of Fig. 1, a single photograph is presented showing 5 reflections or virtual images of the camera, at different distances and perspectives. In the lower portion of section B of Fig. 1, colored boxes illustrate the blur as a function of the depth of each of the 5 virtual images from the upper portion. Through this example, it is possible to appreciate the depth blur that is achieved through a single captured image of the virtual image matrix generated by the cavity.

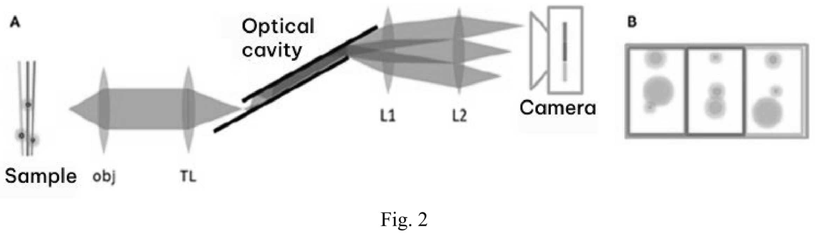

On the other hand, Fig. 2 shows a scheme of the device of the invention, which comprises a free-space mirror cavity that generates a virtual image matrix for simultaneous multi-plane focusing through a single frame of a camera. In section A of Fig. 2, the light passing through the mirror cavity travels different path lengths depending on its angle of incidence and its position upon entering the cavity. The optical path length is different in discrete groups, given by the number of reflections in the cavity. Section B of Fig. 1 shows the captured virtual images, where each group with different optical path length is focused into a translated image without overlapping in a single camera, obtaining a single image focused on different depths of the sample.

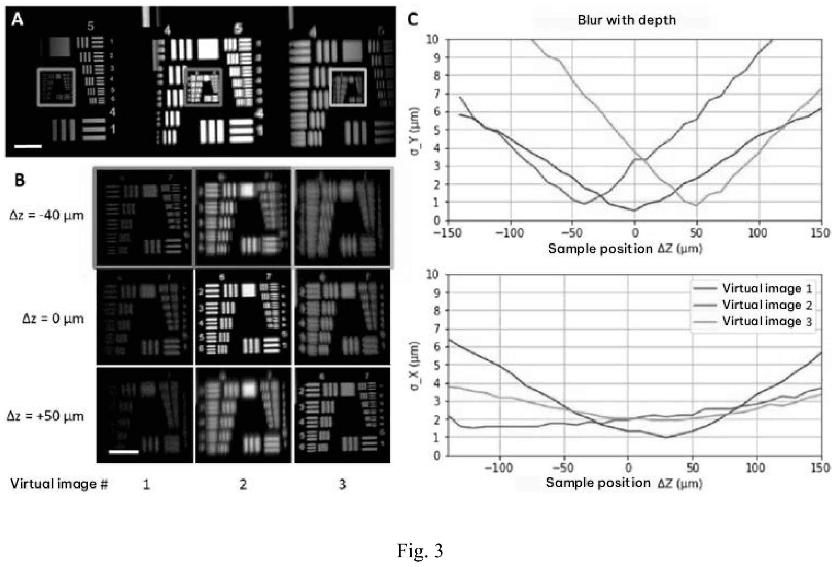

Finally, Fig. 3 shows the results obtained from image capture using a virtual image matrix-forming cavity that allows multiplane focusing without overlapping using a single camera. In section A of Fig. 3, a single image from the camera is shown, where the scale bar is 200 $\mu$m. In section B of Fig. 3, boxes are presented that show the focus of the central groups in three virtual images, based on individual shots at three sample positions. The scale bar in section B of Fig. 3 is 100 $\mu$m. Finally, section C of Fig. 3 shows diagrams that quantify the lateral blur in each virtual image as a function of depth.

EXAMPLE No. 1

As an example, the system, methodology, and device of the invention were used to obtain images of a USAF 1951 resolution target. For this, a 10x dry objective with NA = 0.3 and a tube lens with f = 100 mm were used, achieving a magnification of 5.33x. Then, to generate a virtual image matrix focused on different depths, a free-space light cavity formed by two parallel mirrors reflecting inward was designed (see Fig. 2, section A). The length of the optical path traveled through the cavity was determined by the number of reflections within the cavity, given by the angle of the incident light. Therefore, the output of the cavity emits image-forming beams with characteristic angular content and optical path length. A lens located at the focal distance of the cavity entrance (L1, f = 100 mm, in Fig. 2) collimates light from the origin of the cavity entrance, in different directions from the cavity output. Another lens (L2, f = 100 mm, in Fig. 2), located at the focal distance from the cavity output and from the camera, converts the divergent beam angles at the cavity output into non-overlapping virtual image positions in the camera.

In this example, the cavity was constructed with 2 first-surface aluminum-coated reflective mirrors sized 80 x 95 mm$^2$. The mirrors were arranged at a distance of 2.26 mm apart and at an angle of 21.8º with respect to the optical axis. The cavity in this example has an axial length of 83.8 mm from the entrance to the exit.

Transilluminated with an LED and a diffuser, the resolution target was axially scanned in front of an objective lens, and images from the camera were obtained every 10 $\mu$m over a range of 300 $\mu$m. The captured images were computationally analyzed to fit a reference image of the blurred sample with a one-dimensional Gaussian kernel that best matched the blur of the sample in each virtual image at each sample position, yielding the Gaussian standard deviation $\sigma$. To study the influence of an asymmetric aperture of the mirror cavity, this quantification was calculated independently for the lateral blur in the X and Y axes. To evaluate the contrast in binary mask elements of the resolution target, the following equation was used:

$$c = \frac{I_{max} - I_{min}}{I_{max} + I_{min}}$$

Where $I_{max}$ and $I_{min}$ are the maximum and minimum intensities in the region of interest, after directional averaging.

As part of the results, each obtained image showed three non-overlapping virtual images (see Fig. 3, section A), each covering a field of view of 902 x 2534 $\mu$m$^2$ of the sample with a magnification of 5.13x. In the lateral virtual images, a vignetting effect was observed, which was attributed to the limited angular content of the light source and the limited angular performance of the optical elements used in preparing this experimental example.

Following the axial translation of the sample, the images changed focus, although with a different focal plane position. The virtual images were best focused at different relative axial positions of -40, 0, and 50 $\mu$m respectively for each virtual image. The exemplary images with each focused virtual image shown are displayed in Fig. 2, section B. Due to a rectangular aperture, the focus changed more sharply in one lateral direction than in the other. As shown in Fig. 3, section C, when a directional Gaussian blur kernel was fitted, it was evident that the focus along the Y axis changed sharply (see Fig. 3, section C, upper portion), while along the X axis the change was smoother (see Fig. 3, section C, lower portion).

The smallest features in the resolution target used in this experiment were group 7, element 6, corresponding to bars with 2.19 $\mu$m width and spacing. The contrast along the Y axis in these bars was 24.4%, 35.4%, and 26.8% respectively for each focused virtual image (see Fig. 3, section B, diagonal images), compared to 38.2% in a reference image without a mirror matrix, while the contrast along the X axis was 2.9%, 15.8%, and 3.6% for each focused virtual image, versus 38.1% in a reference image without mirrors.

These results show that an optical cavity formed by parallel mirrors can generate a virtual matrix of images focused on different depths, with the potential to simultaneously generate images from multiple focal planes in a semi-transparent three-dimensional sample.

EXAMPLE No. 2

In the present example, a minimum system is defined to obtain images of multiple focal planes using a single camera, investigating the axial and lateral separation of virtual images through the simulated propagation of a Gaussian beam through a virtual image formation cavity with parallel mirrors.

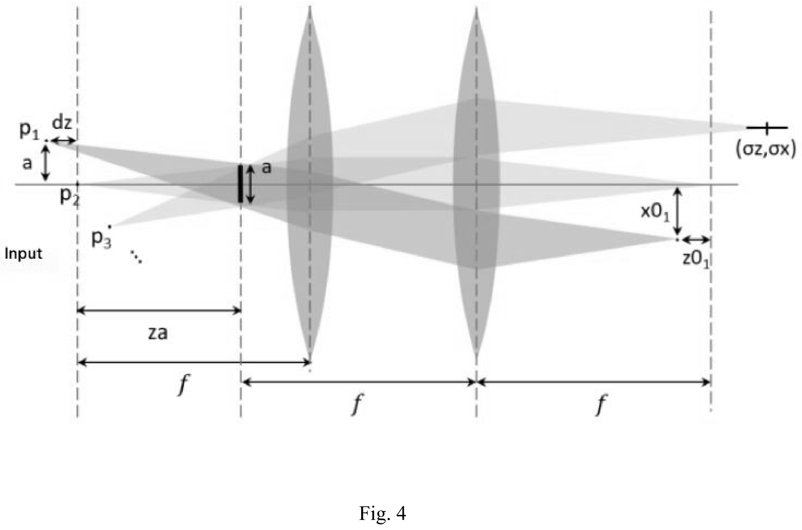

Numerical calculations were used to model a device for forming a virtual image matrix. This device consists of an optical cavity formed by two parallel mirrors and a set of lenses to form images. The reflections in the mirrors result in virtual images of the input volume (sample). In the simulation, it was assumed that the cavity generates three virtual images translated along one direction with regular spacing, and that it had an output window that imposes a common rectangular aperture constraint on all virtual images. The image capture system consisted of two lenses with focal length f, a first lens was placed at a distance f from the central virtual image, and a second lens was placed at a distance $f$ from the output aperture of the mirror cavity (See Fig. 4). The simulated focal length was $f$ = 100 mm. A series of entry points $pk$, $k \in \{-1,0,1\}$ were defined to represent each virtual image. Each point source was modeled as a one-dimensional Gaussian beam, with waist $w_0$ propagating in the +z direction, starting from a focus located at $(x, z)$ = ($a k$, -$dz k$) with intensity:

$$I(x,z) = \left(\frac{w_0}{w(z)}\right)^2 exp\left(\frac{-2x^2}{w(z)^2}\right)$$

The output of the optical cavity was modeled as a one-dimensional rectangular aperture centered at (0, $za$). The width of this aperture was calculated to cover one third of the total numerical aperture of the simulated Gaussian beams, regardless of the relative position of the aperture. To achieve this, the total aperture width was defined as twice the beam waist radius, plus the input field of view defined by twice the lateral separation of two mirrors in an example optical cavity implementation. $a = 1/3 * (2 w(z) + 4.5 mm)$.

The numerical results were referenced at positions relative to the output image at a distance $f$ from the second lens. The propagation of light was computationally calculated using the Fresnel diffraction approximation, an ideal rectangular aperture, and ideal lenses. The output beams resulting from each virtual input were analyzed independently. The images through the aperture at different angles of incidence created artifacts (errors) of apodization; to simplify the analysis, the parameters of a Gaussian beam were fitted to each output beam to find its location and the approximate equivalent waist radius.

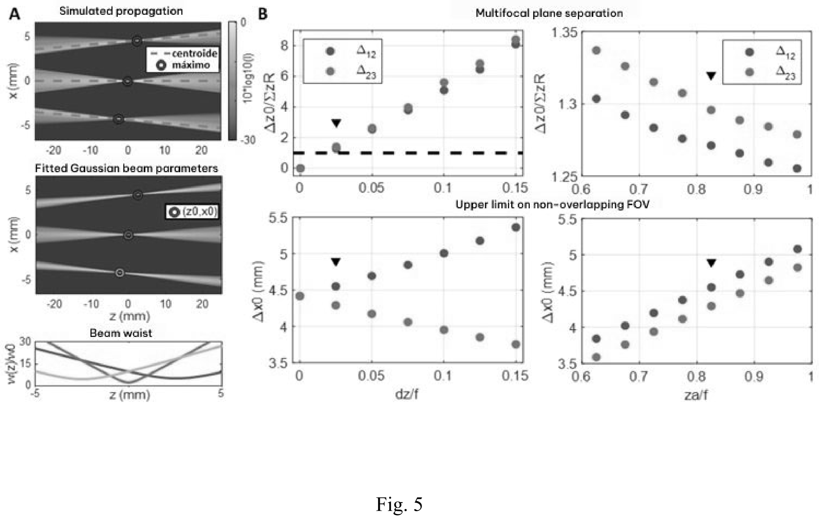

As part of the example, Fig. 5 shows results for the design of optimal parameters for forming matrices of virtual images through the propagation of a beam. In section A of Fig. 5, it shows: top, the propagation of the simulated beam; middle, fitted Gaussian beams; bottom, evolution of the beam waist in fitted beams. On the other hand, section B of Fig. 5 shows the changes in plane separation (upper portion) and FOV (lower portion) as a function of the axial separation of the input image (left) and the aperture position (right). The minimum criterion for the plane separation limited by diffraction is shown as a dashed black line in Fig. 5, section B.

From the results, it is possible to determine that the propagation of light from each entry point resulted in a focal point near the camera plane. To visualize the relative position of the foci, their incoherent sum was used to show their focus as a function of distance (See Fig. 5, section A, upper portion). Since after the square aperture the beams were not Gaussian, their focusing properties were not resolved analytically. The least squares fitting was used to find the parameters of the Gaussian beam that best approximated each of the output beams. In Fig. 5, section A, middle portion, an example of fitting is shown, where the Gaussian beams approximate the propagation visualized in the upper portion of section A, Fig. 5. Additionally, the parameters of the fitted Gaussian beam were analyzed, such as the beam waist as a function of the axial distance of the respective beams, which is shown in Fig. 5, section A, lower portion. The axial separation of the planes is evidenced by the increase in the beam waist of neighboring planes in their axial displacement. From this, it is deduced that the distance between planes given by the difference in axial focus location $z0$ must exceed the sum of the Rayleigh range $zR$ of the two beams to resolve two axially separated sources as two different peaks. That is, $dz0/\Sigma zR > 1$ would allow for two distinct images (one focused, the other defocused) of two axially separated point sources.

By changing the relative aperture location $za$ and the lateral separation of the virtual input $dz$, it is found that they jointly affect the axial and lateral separation of the images. To design a cavity with a minimum plane separation that resolves different image planes, $dz = 0.025f$ is chosen, and to balance an increased field of view (Field Of View, FOV) without losing plane separation, $za = 0.825f$ is chosen. These values are indicated in Fig. 5, section B, as black triangles and their simulation is also visualized in that figure. The values used in the simulation were also used to guide the physical implementation described in Example No. 1.

Through Example No. 2, it is possible to exemplify the use of beam propagation from point sources to analyze the geometric effects in the design of a cavity for forming a virtual image matrix, allowing for the obtaining of design parameters, such as the aperture, length, and angle of the cavity, for different practical applications of the solution proposed in the present invention.

**Claims**

1. A system and method for performing volumetric measurements from volumetric images obtained by a volumetric image capture device, **CHARACTERIZED in that** it comprises:

    - guiding radiation emitted from an extended object through an optical cavity composed of reflective surfaces; and
    - configuring the optical cavity to impart different optical path lengths to the radiation guided by the optical cavity depending on the radiation's source position from the object and the direction of radiation propagation from the object.

2. A system and method for performing volumetric measurements from volumetric images obtained by a volumetric image capture device, **CHARACTERIZED in that** it comprises:

    guiding light emitted by an extended object to be analyzed through a reflective optical cavity;
    focusing the light guided by the cavity using an image capture device such that different path lengths imparted to the light guided through the cavity create a series of virtual images; and
    configuring the cavity and the image capture device to relate the axial position of the sample to the lateral translation of the virtual images, or to relate the lateral translation of the sample to the axial position of the virtual images.

3. The system and method of any of the preceding claims, **CHARACTERIZED in that** it further comprises:

- illuminating an object of interest using coherent or partially coherent radiation;
- illuminating an object of interest using incoherent radiation;
- illuminating an object of interest using radiation with a visible or near-visible wavelength;
- guiding radiation reflected or scattered by the object;
- guiding spontaneously emitted radiation from the object;
- guiding fluorescence emitted from the object;
- using spectral filters to exclusively guide light in a spectrum of interest from the object;
- guiding light emitted from the object through lenses to direct the light and form intermediate images of the object;
- modulating the light emitted from the object with active or passive devices to direct or form images with the emitted light;
- configuring multiple reflective surfaces to guide the light:

  • using semitransparent mirrors;
  • using mirrors with flat surfaces;
  • using mirrors with curved surfaces;
  • using two mirrors;
  • using two flat mirrors with reflective surfaces oriented inwardly;
  • using two flat mirrors with parallel reflective surfaces; or
  • using two flat mirrors with reflective surfaces forming an acute angle between them;

- guiding the light to reflect on the reflective surfaces:

  • reflecting part of the light once on some reflective surface;
  • reflecting the light multiple times on the reflective surfaces;
  • conducting the light through multiple reflections entering from one end of the cavity to exit from the opposite end of the cavity; or
  • conducting the light through multiple reflections entering from a region of the cavity to exit from the same region of the cavity;

- focusing the guided light to form images:

  • using a lens; or
  • using multiple lenses;

- modulating the light guided by the optical cavity:

  • directing the light using active devices by:

    * phase modulators;
    * micro-mirror arrays;
    * galvanometric mirrors; and/or
    * shutters;

  • using passive devices, for example:

    * spectral filters;

- detecting the guided light:

  • using a camera; and/or
  • using photodetectors;

- arranging detection devices to register the radiation emitted by the object and guided by the optical cavity:

  • placing a camera in a plane where some virtual image of the object is formed, where the plane is:

    * front image plane;
    * intermediate image plane; or
    * rear image plane;

  • placing a camera in intermediate planes where no virtual images of the object are formed;
  • sequentially directing the emitted and guided light towards a point photodetector, located in an image plane of the object; and/or
  • placing a camera to receive light from the object and light from a coherent reference, detecting their interference.; and/or

- computationally processing the recorded data to infer the three-dimensional origin of the emitted radiation, based on the knowledge of the physical configuration of the device.

Fig. 1

Fig. 2

Fig. 3

Fig. 4

Fig. 5

**EP 4 715 441 A1**

## INTERNATIONAL SEARCH REPORT

| International application No. |
|---|
| PCT/CL2024/050037 |

| A. CLASSIFICATION OF SUBJECT MATTER |
|---|
| (CIP) G02B21/00, 21/64; G02B5/00, G02B5/08 (2024.01) |
| According to International Patent Classification (IPC) or to both national classification and IPC |

| B. FIELDS SEARCHED |
|---|
| Minimum documentation searched (classification system followed by classification symbols) |
| (CIP) G02B21, G02B5. |
| Documentation searched other than minimum documentation to the extent that such documents are included in the fields searched |
| Electronic data base consulted during the international search (name of data base and, where practicable, search terms used) |
| DERWENT INNOVATION, GOOGLE, ESPACENET, INAPI |

| C. DOCUMENTS CONSIDERED TO BE RELEVANT |
|---|

| Category* | Citation of document, with indication, where appropriate, of the relevant passages | Relevant to claim No. |
|---|---|---|
| X | US 2015192767 A1 (THE REGENTS OF UNIVERSITY OF CALIFORNIA) 09 July 2015. Abstract: [0005], [0032], [0034], line 15-17; [0035], [0037], [0039], line 1-9: [0049], line 11-12: figs. 1 , 2, 8. | 1-3 |
| X | WO 2022026952 A1 (THE BOARD OF REGENTS OF THE UNIVERSITY OF TEXAS SYSTEM) 03 February 2022. Abstract; [0006], [0017]- [0018], [0020], [0021]-[0023]; [0033], line 3-4; figs. 1-10. | 1-3 |
| A | EP 3049859 B1 (ECOLE POLYTECHNIQUE FÉDÉRALE DE LAUSANNE) 22 April 2020. Abstract; [0016], [0024]; [0025]; [0032]; figs. 1 , 8. | |

| ☒ Further documents are listed in the continuation of Box C. | ☒ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 02/07/2024    02/July/2024 | 22/07/2024    22/July/2024 |

| Name and mailing address of the ISA/CL | Authorized officer |
|---|---|
| Facsimile No. | Telephone No. |

Form PCT/ISA/210 (second sheet) (January 2015)

## INTERNATIONAL SEARCH REPORT

International application No.

PCT/CL2024/050037

C (Continuation). DOCUMENTS CONSIDERED TO BE RELEVANT

| Category* | Citation of document, with indication, where appropriate, of the relevant passages | Relevant to claim No. |
|---|---|---|
| A | **US 2016063718 A1 (LEICA MICROSYSTEMS CMS GMBH) 03 March 2016.** **Abstract; [0022], [0039], [0052]; fig. 1.** | |
| A | **EP 3889663 A1 (LEICA MICROSYSTEMS CMS GMBH) 06 October 2021.** **Abstract; [0053], [0054]; fig. 3.** | |
| A | **US 9234846 B2 (CARL ZEISS MICROSCOPY GMBH) 12 January 2016.** **Abstract; col. 17, line 37-49; col. 18, line 4-26; fig. 13.** | |

Form PCT/ISA/210 (continuation of second sheet) (January 2015)

INTERNATIONAL SEARCH REPORT
Information on patent family members

| International application No. |
|---|
| PCT/CL2024/050037 |

| | | | |
|---|---|---|---|
| US2015192767A1 | 09-07-2015 | US9823457B2 | 21-11-2017 |
| WO2022026952A1 | 03-02-2022 | US2023314787A1 | 05-10-2023 |
| EP3049859B1 | 22-04-2020 | EP3049859A1 | 03-08-2016 |
| | | WO2015044819A1 | 02-04-2015 |
| US2016063718A1 | 03-03-2016 | CN206178237U | 17-05-2017 |
| | | DE102013102988A1 | 25-09-2014 |
| | | WO2014147257A1 | 25-09-2014 |
| | | JP2016515718A | 30-05-2016 |
| | | JP6659531B2 | 04-03-2020 |
| | | US9665940B2 | 30-05-2017 |
| EP3889663A1 | 06-10-2021 | EP3889662A1 | 06-10-2021 |
| US9234846B2 | 12-01-2016 | DE102009060793A1 | 28-07-2011 |
| | | EP2516993A1 | 31-10-2012 |
| | | WO2011085766A1 | 21-07-2011 |
| | | JP2013515249A | 02-05-2013 |
| | | JP2015187745A | 29-10-2015 |
| | | JP6018263B2 | 02-11-2016 |
| | | JP2017004024A | 05-01-2017 |
| | | JP6282706B2 | 21-02-2018 |
| | | US2013010098A1 | 10-01-2013 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **WEISENBURGER** ; **VAZIRI**. *Annual Review of Neuroscience*, 2018, vol. 41, 431-452

- **KIM, DAL HYUNG et al.** Panneuronal calcium imaging with cellular resolution in freely swimming zebrafish.. *Nature methods*, 2017, vol. 14 (11), 1107-1114, https://doi.org/10.1038/nmeth.4429